# EUROPEAN PATENT SPECIFICATION

(11) **EP 1 492 660 B1**
(45) Date of publication and mention of the grant of the patent: **23.08.2006**
(21) Application number: 03745052.5
(22) Date of filing: 18.03.2003
(51) Int. Cl.: B31B 1/14, B23K 26/00

(54) **A METHOD IN THE MANUFACTURE OF A PACKAGING LAMINATE, A PLANT IN THE MANUFACTURE OF THE PACKAGING LAMINATE, AND THE THUS MANUFACTURED PACKAGING LAMINATE**
"VERFAHREN ZUR HERSTELLUNG EINES VERPACKUNGSLAMINATS, ANLAGE ZUR HERSTELLUNG DES VERPACKUNGSLAMINATS UND SO HERGESTELLTES VERPACKUNGSLAMINAT"
PROCEDE DE FABRICATION D'UN FILM D'EMBALLAGE LAMINE, INSTALLATION DE FABRICATION D'UN FILM D'EMBALLAGE LAMINE ET FILM D'EMBALLAGE LAMINE PRODUIT PAR LEDIT PROCEDE

(30) Priority: 25.03.2002 SE 0200923
(43) Date of publication of application: 05.01.2005
(73) Proprietor: Tetra Laval Holdings & Finance S.A., 1009 Pully (CH)
(72) Inventor: ANDERSSON, Ingvar, S-246 52 Löddeköpinge (SE)
(74) Representative: Sundell, Hakan Oskar Anders
(86) International application number: PCT/SE2003/000456
(87) International publication number: WO 2003/080324

(56) References cited:
- WO-A2-98/45175
- US-A- 3 626 143
- US-A- 3 790 744

## Description

### TECHNICAL FIELD

The present invention relates to a method of manufacture of a web-shaped packaging laminate comprising a core layer of paper or paperboard, the method including the steps of coating a first side of a material web of paper or paperboard with an outer layer of thermoplastic material, and thereafter, with the aid of laser burning on the thus thermoplastic coated first side of the packaging laminate, forming a perforation line through said thermoplastic layer and said core layer. The present invention also relates to a plant in carrying the method into effect, as well as the packaging laminate produced by means of the method.

### THE STATE OF THE ART AND PROBLEM

Consumer packages for foods are often manufactured from a flexible packaging material which, by cutting, folding, sealing and filling, has been converted into filled and sealed packaging containers of the desired configuration. The packaging material normally consists of a laminate which includes a core layer of a fibre material, e.g. paper or paperboard which is coated on both sides with a liquid-tight, thermoplastic material, e.g. polyethylene or polypropylene. The packaging laminate may also include other layers of plastic or metal foil in order to provide improved light barrier properties, gas barrier properties (in particular against oxygen gas) or resistance to liquids. A special type of packaging container consists of a packaging container intended for retorting in the filled state. This allows the packaging container to be stored with its contents at room temperature for an extremely long time, of the order of up to 24 months, implying that packaging containers of this type constitute completely adequate alternatives for preserved foods in metal cans or glass jars, for example for animal foods. However, this presupposes a packaging laminate particularly adapted for retorting, for example normally displaying an outer thermoplastic layer of polypropylene of greater thickness/grammage than that which is conventional for corresponding packaging laminates which are not intended for retorting. , .

Such a packaging laminate can be provided with a simple opening arrangement in the form of a perforation which is realised by laser burning on the thermoplastic side of the packaging laminate in such a manner that the laser beam is caused to bum through both the thermoplastic layer and the fibre core but stop at a gas barrier layer which has higher density, normally a metal foil. However, in the laser burning operation, residual materials of the thermoplastic are formed, this residual material forming a raised ridge on either side of the elongate perforation line immediately adjacent the line. This phenomenon has been demonstrated among others in USPS 3,790,744 and also USPS 3,909,582. In packaging laminates for retorting, i.e. packaging laminates with an extra thick outer thermoplastic layer, these raised ridges of residual material from the thermoplastic will become even more accentuated. When the packaging laminate is further processed, including processing on rollers or rolling up on magazine reels, these ridges of residual material may cause problems. Thus, deposits of such residual material occur on the rollers, and in such an event production must be stopped at regular intervals for cleaning the rollers. When the packaging laminate is rolled up on magazine reels, the ridges build up in the different layers in the magazine reel on one another so that the reel becomes uneven on the outside, which seriously impedes its handling. Moreover, residual material from each ridge is deposited from the outside of the packaging laminate onto the inside of the next layer of packaging laminate in the reel, which implies an undesirable presence of residual material on the inside of the packaging laminate when this is to be reformed into packaging containers and be filled with their intended contents.

One method of solving the problem of the build-up of ridges of residual material could be grind them down. However, this is not desirable, given the problem of dust formation. In large scale production, large quantities of dust would be created which would have a harmful effect on the working environment and which would need to be taken care of.

Another, more general problem in connection with opening arrangements in the form of perforation lines is to realise a perforation which is easy to open (good accessibility) but which does not incur the risk of leakage in the event of rough handling of the packaging container.

### BRIEF SUMMARY OF THE INVENTION

According to the present invention, a method and a plant are proposed in the manufacture of a laser-perforated packaging laminate whereby the above-outlined drawbacks are obviated or at least reduced. According to the present invention, the thus manufactured packaging laminate is also proposed which lacks projecting ridges of residual material substantially from its outer surface from the laser perforation, and which preferably displays improved accessibility in the perforation, simultaneously with superior integrity, i.e. slight risk of leakage.

This and other objects are attained by means of the method, the plant and the packaging laminate as these are defined in the appended Claims.

Instead of attempting to avoid the build-up of residual material in the laser perforation, or to remove such a build-up of residual material before the packaging laminate is further processed and handled, the inventive concept herein is to conceal the ridges of residual material so that they are substantially not permitted to project out over (beyond) the outer surface of the surrounding material. In practice, this is realised in that the web-shaped packaging laminate is provided with a compression line in which the laser perforation operation is thereafter carried out. Thus, a compression line is formed on the outer thermoplastic side of the packaging laminate whereby the fibre core layer is caused to be compressed.

The compression line is formed in a compression station in the plant, the compression station comprising a compression tool with a male part in the form of a projecting compression portion around the circumference of a roller, and a smoother counter abutment, preferably in the form of a counter roller. The tool, and thereby the thus formed compression line, differ from a tool for a conventional crease line and the crease line proper, respectively, both in dimensions and in the fact that the tool displays no female part, i.e. a depression in the counter roller for receiving the male part. Thus, in a conventional crease line, the material has not substantially been compressed, but merely displaced out of the plane of surrounding material, while the material (at least the fibre core layer) in the compression line according to the present invention is *de facto* compressed, the packaging laminate being smooth on the opposite side against the compression line. Further, the compression line according to the present invention naturally differs from a conventional crease line in that a perforation line is formed therein by laser burning.

According to one aspect of the present invention, said packaging laminate, at least when it is intended for retorting, displays a total thickness of the order of magnitude of 0.2 - 0.6 mm, preferably 0.3 - 0.5 mm. On the opposing side to the outer thermoplastic layer which is pressed down in the compression line, the packaging laminate displays a gas barrier layer, preferably a metal foil such as aluminium foil (Alifoil) as well as at least one inner thermoplastic layer, intended to be in contact with the contents of the packaging container.

### DETAILED DESCRIPTION OF THE INVENTION

The present invention will now be described in greater detail hereinbelow, with particular reference to the accompanying Drawings. In the accompanying Drawings:
Fig. 1 shows a compression tool for carrying the method according to the invention into effect;
Fig. 1A shows a part A of the tool according to Fig. 1 in greater detail and in cross section;
Fig. 2 is a cross section through a compression line including a perforation line in a packaging laminate according to the present invention; and
Fig. 3 shows a production line for the present invention.

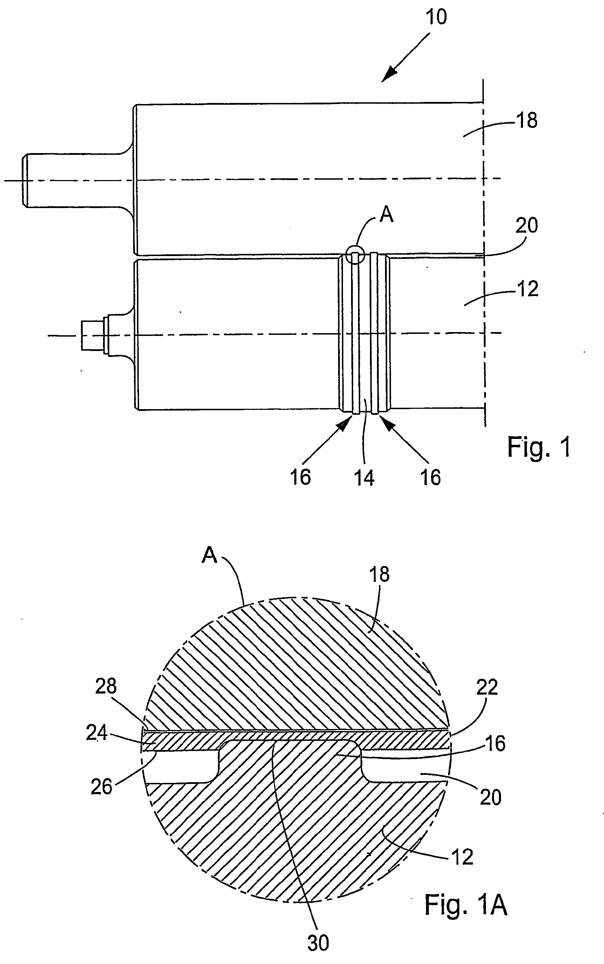

Fig. 1 shows a compression tool for carrying the method according to the present invention into effect, the tool carrying generic reference numeral 10. The compression tool 10 includes a roller 12 with a central portion 14 of larger diameter than the roller 12 proper. On this portion 14, there are disposed two projecting compression portions 16 which extend around the circumference of the roller 12 and the central portion 14. That two compression portions 16 are provided with slight interspace is because the present invention, in the illustrated embodiment, is intended to be utilised in connection with a plant of the type described in SE-C-516 532, i.e. a production plant where the web-shaped packaging laminate is provided with a printed region centred in relation to a longitudinal centre line, the material web being, in a step following the perforation step, divided up into two webs of a final width through incisions in said centre line. The centre line of the packaging laminate is thus disposed according to the present invention centrally between the two projecting compression portions 16 in Fig. 1.

A counter roller 18 with a smooth casing surface is disposed to constitute a counter abutment in the compression operation. A nip or gap 20 between the roller 12 and the counter roller 18 is adjustable, whereby the compression tool 10 may be set, on the one hand, for different thicknesses of the packaging laminate and, on the other hand, for different depths of the compression line 30 (Fig. 1 A).

Fig. 1 A shows the section A in Fig. 1 in greater detail as well as in cross section. Here, it is also shown how the packaging laminate 22 is disposed between the roller 12 and the counter roller 18.

The packaging laminate 22 includes a fibre core layer 24 of paper or paperboard, as well as an outer thermoplastic coating layer 26 which displays a surface weight or grammage of 20-50 g/m², preferably 20-40 g/m² and preferably also includes a thermoplastic material selected from the group essentially comprising polyethylene and polypropylene, most preferably polypropylene. On its opposite side, the packaging laminate 22 displays a gas barrier layer, preferably an aluminium foil (Alifoil), as well as at least one liquid barrier layer of thermoplastic material. In the Figure, the gas barrier layer and liquid barrier layer(s) have jointly been given reference numeral 28.

The projecting compression portion 16 on the roller 12 is preferably 1-3 mm, and even more preferably 1.5-2.5 mm wide and preferably 0.2-2 mm, and even more preferably 0.2-1 mm high above the surrounding surface of the roller 12 (i.e. in reality the surface of the central portion 14). Normally however, the entire height of the projecting compression portion 16 of the compression roller 12 is not utilised, but only its upper region is pressed down into the packaging laminate 22. Both the inner and outer angles of the projecting compression portion 16 are provided with gently rounded radii, with a view to not damaging the thermoplastic layer 26.

The projecting compression portion 16 on the roller 12 compresses the core layer 24, normally by at most 70%, preferably at most 60%, but at least 20%, preferably at least 30% of its original and surrounding thickness in the thus formed compression line 30. As a result, the thermoplastic layer 26 sinks down into the compression line 30 proper, but is not subjected to any actual compression itself.

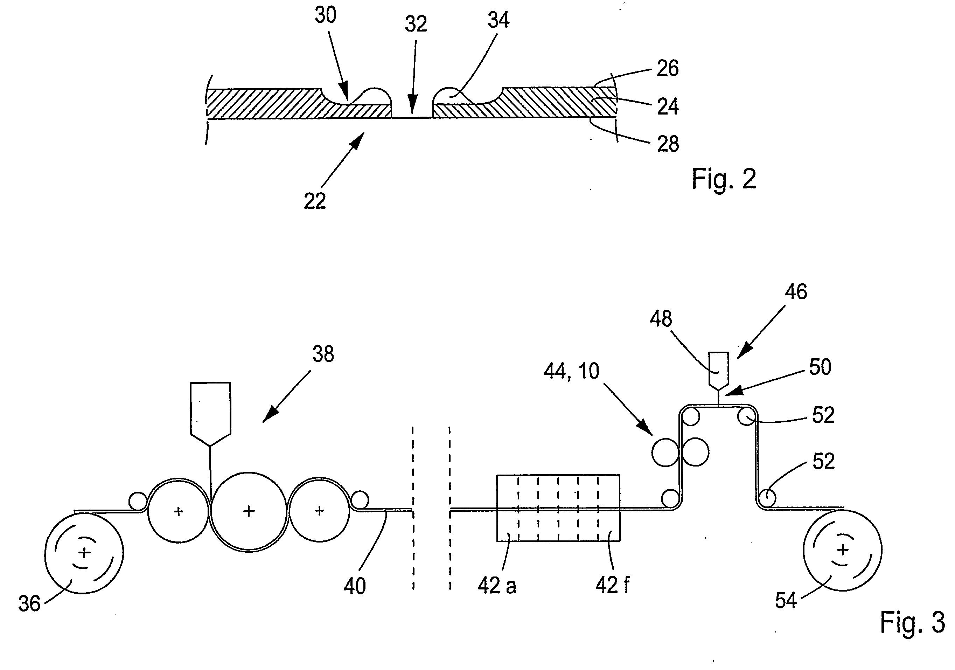

Fig. 2 shows the packaging laminate 22 after a laser perforation line 32 has been formed substantially centrally in the compression line 30. The compression line 30 is considerably wider than the perforation line 32, preferably at least 1.5 times as wide, and even more preferably at least twice as wide, but at most ten times as wide, preferably at most five times as wide, in which even the compression line 30 is preferably 1-3 mm, and even more preferably 1.5-2.5 mm wide and 0.1-0.3 mm, preferably 0.15-0.25 mm deep. The term 'width' of the perforation line 32 is here taken to signify the width of the holes themselves through the thermoplastic layer 26 and the core layer 24, i.e. not including the width of residual material 34 built up around the perforation line after the laser burning operation. On the other hand, the width of the compression line 30 should not be such that it may encompass both the width of the perforation line 32 proper and the residual material 34 built up around the perforation line. The depth should be the least possible depth that permits the ridges of residual material 34 after the laser perforation substantially to be located completely below the level of the surrounding surface of the packaging laminate 22.

Fig. 3 shows a plant or production line for carrying the present invention into effect. A web-shaped core layer of paper or paperboard is rolled up on a magazine reel 36. In a lamination station (coating station) 38, an outer layer of thermoplastic material, e.g. PE (polyethylene) or PP (polypropylene) is extruded on the first side of the core layer. The web-shaped material 40 is also provided with other layers, for the formation of the packaging laminate 22 according to Fig. 1A. These additional coating/lamination operations do not, however, form part of the present invention and will not, therefore, be described in detail here. The packaging laminate is possibly rolled up on a reel (not shown) and transferred to another production line which commences with application of printing ink on the first side of the packaging laminate, i.e. that side provided with the outer thermoplastic layer 26, in one or more printing works 42a-f. The web-shaped packaging laminate thereafter runs further to a compression station 44 where the compression tool 10 according to Fig. 1 and Fig. 1A execute the compression line according to the present invention in the packaging laminate. Thereafter, the packaging laminate is led to a perforation station 46 where a conventional laser burner 48 is disposed to form the perforation line 32 proper (Fig. 2). The packaging laminate now provided with perforation line(s) is led further via rollers 52 and is once again rolled up on a reel 54 in order thereafter to be transferred to additional treatment and processing stations. Such subsequent treatment operations may, for example, consist of creasing and severing the web into a plurality of narrower webs and/or into individual blanks. It is also conceivable that the printing operation and/or the creasing operation be carried out at other sites in the production line.

The present invention is not restricted to the embodiments disclosed here, but may be varied without departing from the scope of the appended Claims.

## Claims

1. Method for manufacture of a web-shaped packaging laminate (22), comprising a core layer (24) of paper or paperboard, a method comprising the steps of coating (38) a first side of a material web (40) of paper or paperboard with an outer layer (26) of thermoplastic material, and thereafter, with the aid of laser burning (46, 48) forming, on the thus thermoplastic coated first side of the packaging laminate (22), a perforation line (32) through said thermoplastic layer (26) and said core layer (24), **characterised by** the step, after said coating (38) with the thermoplastic material, but before the formation of the perforation, of compressing (44, 10) the packaging laminate (22) on said first side, for the formation of a compression line (30) in which said core layer (24) is compressed, whereafter said perforation line (32) is formed in said compression line (30).

2. The method as claimed in Claim 1, **characterised in that** the compression line (30) and the perforation line (32) are formed in relation to one another such that a build-up of thermoplastic residual material (34) around the perforation line (32), after the laser burning (48, 46), will substantially be located entirely below the level of the surrounding surface of the packaging laminate (22), the core layer (24) preferably being compressed by at most 70%, preferably at most 60% but at least 20%, preferably at least 30% of its original thickness in said compression line (30).

3. The method as claimed in Claim 1 or 2, **characterised in that** the compression (30) is considerably wider than the perforation line (32), preferably at least 1.5 times, as wide, and even more preferably at least twice as wide, but at most ten times as wide, preferably at most five times as wide.

4. The method as claimed in any of the preceding Claims, **characterised in that** said web-shaped packaging laminate (22) is further processed after the forming of the perforation line (32), on rollers (52) and/or by rolling up on a reel (54).

5. A plant in the manufacture of a web-shaped packaging laminate (22) comprising a core layer (24) of paper or paperboard, the plant comprising a coating station (38) for forming a coating layer (26) of a thermoplastic material on a first side of said core layer, followed by a perforation station (46) including a laser burner (48), the perforation station being disposed to form a laser-burned perforation line (32) on the first side of the packaging laminate (22) through said thermoplastic layer (26) and said core tayer (24), **characterised by** a compression station (44) between said coating station (38) and said perforation station (46), including a compression tool (10) disposed to form a compression line (30) on said first side of the packaging laminate (22), and that said perforation station (46) is disposed to form said perforation line (32) in said compression line (30).

6. The plant as claimed in Claim 5 **characterised in that** said compression tool (10) includes a roller (12) which displays a projecting compression portion (16) around its circumference, said projecting compression portion being preferably 1-3 mm and even more preferably 1.5-2.5 mm wide and preferably 0.2-2 mm and even more preferably 0.2-1 mm high above the surrounding surface (14) of the roller, as well as a counter roller (18) which preferably displays a smooth circumferential surface, a gap (20) between said roller (12) and said counter roller (18) being adjustable.

7. The plant as claimed in Claim 5 or 6 **characterised in that** it includes additional, subsequent stations for further processing or handling of the packaging laminate, including rollers (52) and/or stations for rolling up the packaging laminate on a reel (54).

8. A packaging laminate comprising a core layer (24) of paper or paperboard as well as a thermoplastic coating layer (26) on a first side thereof, displaying a laser-burned perforation line (32) through the core layer (24) and the thermoplastic layer (26), **characterised in that** said perforation line (32) is disposed in a compression line (30) on the first side of the packaging laminate (22), in which compression line said core layer is compressed.

9. The packaging laminate as claimed in Claim 8, **characterised in that** the compression line (30) and the perforation line (32) are formed in relation to one another so that a build-up of thermoplastic residual material (34) around the perforation line is substantially located entirely below the level of the surrounding surface of the packaging laminate (22), the core layer (24) preferably being compressed in said compression line by at most 70%, preferably at most 60% but at least 20%, preferably at least 30% in relation to its thickness surrounding the compression line (30).

10. The packaging laminate as claimed in Claim 8 or 9, **characterised in that** the compression line (30) is considerably wider than the perforation line (32), preferably at least 1.5 times as wide, and even more preferably at least twice as wide, but at most ten times as wide, preferably at most five times as wide.

11. The packaging laminate as claimed in any of Claims 8 to 10, **characterised in that** said thermoplastic coating layer (26) displays a surface weight or grammage of 20-50 g/m², preferably 20-40 g/m², and that it preferably includes a thermoplastic material selected from the group essentially comprising polyethylene and polypropylene.

## Patentansprüche

1. Verfahren zur Herstellung eines bahnförmigen Verpackungslaminats (22), umfassend eine Kernschicht (24) aus Papier oder Pappe, ein Verfahren umfassend die Schritte des Beschichtens (38) einer ersten Seite einer Materialbahn (40) aus Papier oder Pappe mit einer äußeren Schicht (26) aus thermoplastischem Material, und anschließendem Bilden, durch Laserbrennen (46, 48), einer Perforierungslinie (32) durch die thermoplastische Schicht (26) und die Kernschicht (24) auf der auf diese Weise thermoplastisch beschichteten ersten Seite des Verpackungslaminats (22), **gekennzeichnet durch** den nach der Beschichtung (38) mit dem thermoplastischen Material, aber vor der Bildung der Perforation stattfindenden Schritts des Zusammendrückens (44,10) des Verpackungslaminats (22) auf der ersten Seite, um eine Kompressionslinie (30) zu bilden, in der die Kernschicht (34) zusammengedrückt wird, wobei anschließend die Perforierungslinie (32) in der Kompressionslinie (30) gebildet wird.

2. Verfahren nach Anspruch 1, **dadurch gekennzeichnet, dass** die Kompressionslinie (30) und die Perforierungslinie (32) so zueinander gebildet werden, dass sich nach dem Laserbrennen (48, 46) thermoplastisches Restmaterial (34) um die Perforierungslinie (32) im Wesentlichen vollständig unterhalb des Niveaus der umgebenden Fläche des Verpackungslaminats (22) gebildet hat, wobei die Kernschicht (24) vorzugsweise höchstens um bis zu 70%, vorzugsweise höchstens 60%, aber mindestens 20%, vorzugsweise mindestens 30% seiner ursprünglichen Dicke an der Kompressionslinie (30) zusammengepresst wird.

3. Verfahren nach Anspruch 1 oder 2, **dadurch gekennzeichnet, dass** die Kompressions- (30) deutlich breiter ist als die Perforierungslinie (32), vorzugsweise mindestens 1,5mal so breit und noch bevorzugter mindestens zweimal so breit, aber höchstens 10mal so breit, vorzugsweise höchstens 5mal so breit ist.

4. Verfahren nach einem der vorhergehenden Ansprüche, **dadurch gekennzeichnet, dass** das bahnförmige Verpackungslaminat (22) nach der Bildung der Perforierungslinie (32) auf Walzen (52) und/oder durch Aufrollen auf eine Rolle (54) weiterverarbeitet wird.

5. Anlage zur Herstellung eines bahnförmigen Verpackungslaminats (22) mit einer Kernschicht (24) aus Papier oder Pappe, wobei die Anlage eine Beschichtungsstation (38) zur Bildung einer Überzugsschicht (26) eines thermoplastischen Materials auf einer ersten Seite der Kernschicht enthält, gefolgt von einer Perforierungsstation (46), die einen Laserbrenner (48) enthält, wobei die Perforierungsstation dazu dient, eine lasergebrannte Perforierungslinie (32) auf der ersten Seite des Verpackungslaminats (22) durch die thermoplastische Schicht (26) und die Kernschicht (24) zu bilden, **gekennzeichnet durch** eine Komprimierungsstation (44) zwischen der Beschichtungsstation (38) und der Perforierungsstation (46), die ein Komprimierungswerkzeug (10) enthält, das dazu dient, eine Kompressionslinie (30) auf der ersten Seite des Verpackungslaminats (22) zu bilden, und eine Perforierungsstation (46), die dazu dient, die Perforierungslinie (32) in der Kompressionslinie (30) zu bilden.

6. Anlage nach Anspruch 5, **dadurch gekennzeichnet, dass** das Komprimierungswerkzeug (10) eine Walze (12) enthält, die einen vorstehenden Komprimierungsabschnitt (16) entlang ihres Umfangs aufweist, wobei der vorstehende Komprimierungsabschnitt vorzugsweise 1 - 3 mm und noch bevorzugter 1,5 - 2,5 mm breit ist und sich vorzugsweise 0,2 - 2 mm und noch bevorzugter 0,2 - 1 mm hoch über der umgebenden Fläche (14) der Walze befindet, sowie eine Gegenwalze (18), die vorzugsweise eine weiche Umfangsfläche aufweist, wobei ein Spalt (20) zwischen der Walze (12) und der Gegenwalze (18) einstellbar ist.

7. Anlage nach Anspruch 5 oder 6, **dadurch gekennzeichnet, dass** sie zusätzliche nachfolgende Stationen zur weiteren Verarbeitung oder Handhabung des Verpackungslaminats aufweist, umfassend Walzen (52) und/oder Stationen zum Aufrollen des Verpackungslaminats auf eine Rolle (54).

8. Verpackungslaminat umfassend eine Kernschicht (24) aus Papier oder Pappe sowie eine thermoplastische Überzugsschicht (26) auf einer ersten Seite hiervon, die eine lasergebrannte Perforierungslinie (32) durch die Kernschicht (24) und die thermoplastische Schicht (26) aufweist, **dadurch gekennzeichnet, dass** die Perforierungslinie (32) sich in einer Kompressionslinie (30) auf der ersten Seite des Verpackungslaminats (22) befindet, wobei die Kompressionslinie in die Kernschicht gepresst ist.

9. Verpackungslaminat nach Anspruch 8, **dadurch gekennzeichnet, dass** die Kompressionslinie (30) und die Perforierungslinie (32) so zueinander gebildet werden, dass sich thermoplastisches Restmaterial (34) um die Perforierungslinie im Wesentlichen vollständig unterhalb des Niveaus der umgebenden Fläche des Verpackungslaminats (22) aufbaut, wobei die Kernschicht (24) vorzugsweise in der Kompressionslinie um höchstens 70%, vorzugsweise höchstens 60%, jedoch wenigstens 20%, vorzugsweise mindestens 30% in Bezug auf ihre die Kompressionslinie (30) umgebende Dicke zusammengepresst wird.

10. Verpackungslaminat nach Anspruch 8 oder 9, **dadurch gekennzeichnet, dass** die Kompressionslinie (30) deutlich breiter als die Perforierungslinie (32) ist, vorzugsweise wenigstens 1,5mal so breit und noch bevorzugter wenigstens zweimal so breit, jedoch höchstens 10mal so breit, vorzugsweise höchstens 5mal so breit.

11. Verpackungslaminat nach einem der Ansprüche 8 bis 10, **dadurch gekennzeichnet, dass** die thermoplastische Überzugsschicht (26) ein Flächengewicht oder eine Grammatur von 20-50 g/m², vorzugsweise 20 - 40 g/m² hat, und dass sie vorzugsweise ein thermoplastisches Material enthält, das aus der Gruppe ausgewählt wurde, die hauptsächlich Polyethylen und Polypropylen enthält.

## Revendications

1. Procédé de fabrication d'un film d'emballage laminé en forme de bande (22), comprenant une couche d'âme (24) en papier ou carton, le dit procédé comprenant les étapes de revêtement (38) d'une première face d'une bande de matière (40) en papier ou carton avec une couche extérieure (26) de matière thermoplastique et ensuite, par brûlage au laser (46, 48), de création, sur la première face ainsi revêtue de matière thermoplastique du film d'emballage laminé (22), d'une ligne de perforation (32) à travers la dite couche de matière thermoplastique (26) et la dite couche d'âme (24), **caractérisé par** l'étape, après le dit revêtement (38) avec la matière thermoplastique mais avant la formation de la perforation, de compression (44,10) du film d'emballage laminé (22) sur la dite première face, pour la création d'une ligne de compression (30) dans laquelle la dite couche d'âme (24) est comprimée, après quoi la dite ligne de perforation (32) est formée dans la dite ligne de compression (30).

2. Procédé selon la revendication 1, **caractérisé en ce que** la ligne de compression (30) et la ligne de perforation (32) sont formées l'une par rapport à l'autre de sorte qu'une accumulation de matière thermoplastique résiduelle (34) autour de la ligne de perforation (32), après le brûlage au laser (48, 46), se trouve sensiblement entièrement au-dessous du niveau de la surface d'entourage du film d'emballage laminé (22), la couche d'âme (24) étant de préférence comprimée au plus de 70%, avantageusement au plus de 60%, mais au moins de 20%, et de préférence au moins de 30% de son épaisseur initiale dans la dite ligne de compression (30).

3. Procédé selon la revendication 1 ou 2, **caractérisé en ce que** la ligne de compression (30) est beaucoup plus large que la ligne de perforation (32), de préférence au moins 1,5 fois plus large, et même plus avantageusement au moins deux fois plus large, mais au plus dix fois plus large et de préférence au plus cinq fois plus large.

4. Procédé selon une quelconque des revendications précédentes, **caractérisé en ce que** le dit film d'emballage laminé en forme de bande (22) est en outre traité après la formation de la ligne de perforation (32), sur des rouleaux (52) et/ou par enroulement sur une bobine (54).

5. Installation pour la fabrication d'un film d'emballage laminé en forme de bande (22) comprenant une couche d'âme (24) en papier ou carton, l'installation comprenant une station de revêtement (38) pour former une couche de revêtement (26) d'une matière thermoplastique sur une première face de la dite couche d'âme, suivie par une station de perforation (46) comportant un brûleur à laser (48), la station de perforation étant disposée de manière à former une ligne de perforation brûlée au laser (32) sur la première face du film d'emballage laminé (22) à travers la dite couche de matière thermoplastique (26) et la dite couche d'âme (24), **caractérisée en ce qu'**une station de compression (44) est placée entre la dite station de revêtement (38) et la dite station de perforation (46) et comprend un outil de compression (10) disposé pour former une ligne de compression (30) sur la dite première face du film d'emballage laminé (22), et **en ce que** la dite station de perforation (46) est disposée pour former la dite ligne de perforation (32) dans la dite ligne de compression (30).

6. Installation selon la revendication 5, **caractérisée en ce que** le dit outil de compression (10) comprend un rouleau (12) qui présente une partie de compression en saillie (16) autour de sa circonférence, la dite partie de compression en saillie ayant une largeur de préférence de 1 à 3 mm et encore mieux de 1,5 à 2,5 mm, et une hauteur de préférence de 0,2 à 2 mm et encore mieux de 0,2 à 1 mm au-dessus de la surface d'entourage (14) du rouleau, ainsi qu'un rouleau opposé (18) qui présente de préférence une surface circonférentielle lisse, un intervalle (20) entre le dit rouleau (12) et le dit rouleau opposé (18) étant réglable.

7. Installation selon la revendication 5 ou 6, **caractérisée en ce qu'**elle comprend des stations additionnelles suivantes pour un traitement ou une manipulation supplémentaire du film d'emballage laminé, comprenant des rouleaux (52) et/ou des stations pour enrouler le film d'emballage laminé sur une bobine (54).

8. Film d'emballage laminé comprenant une couche d'âme (24) en papier ou carton ainsi qu'une couche de revêtement thermoplastique (26) sur une première face de cette dernière, présentant une ligne de perforation par brûlure au laser (32) à travers la couche d'âme (24) et la couche thermoplastique (26), **caractérisé en ce que** la dite ligne de perforation (32) est disposée dans une ligne de compression (30) sur la première face du film d'emballage laminé (22), la dite couche d'âme étant comprimée dans la dite ligne de compression.

9. Film d'emballage laminé selon la revendication, 8, **caractérisé en ce que** la ligne de compression (30) et la ligne de perforation (32) sont formées l'une par rapport à l'autre de sorte qu'une accumulation de matière thermoplastique résiduelle (34) autour de la ligne de perforation est située sensiblement entièrement au-dessous du niveau de la surface d'entourage du film d'emballage laminé (22), la couche d'âme (24) étant de préférence comprimée dans la dite ligne de compression au plus de 70%, de préférence au plus de 60% mais au moins de 20%, de préférence au moins de 30% par rapport à son épaisseur autour de la ligne de compression (30).

10. Film d'emballage laminé selon la revendication 8 ou 9, **caractérisé en ce que** la ligne de compression (30) est beaucoup plus large que la ligne de perforation (32), de préférence au moins 1,5 fois plus large et même plus avantageusement au moins deux fois plus large, mais au plus dix fois plus large et de préférence au plus cinq fois plus large.

11. Film d'emballage laminé selon une quelconque des revendications 8 à 10, **caractérisé en ce que** la dite couche de revêtement thermoplastique (26) présente un poids de surface ou grammage de 20 à 50 g/m², de préférence de 20 à 40 g/m², et **en ce qu'**il contient de préférence une matière thermoplastique choisie dans le groupe comprenant essentiellement le polyéthylène et le polypropylène.
